# EUROPÄISCHE PATENTSCHRIFT

(11) **EP 1 705 043 B1**
(45) Veröffentlichungstag und Bekanntmachung des Hinweises auf die Patenterteilung: **19.10.2011**
(21) Anmeldenummer: 06004730.5
(22) Anmeldetag: 08.03.2006
(51) Int. Cl.: B60J 5/04

(54) **Seitenaufprallträger für ein Kraftfahrzeug**
Side impact beam for a vehicle
Renfort contre des chocs latéraux pour un véhicule

(30) Priorität: 21.03.2005 DE 102005012981; 02.08.2005 DE 102005036292
(43) Veröffentlichungstag der Anmeldung: 27.09.2006
(73) Patentinhaber: DURA Automotive Body & Glass Systems GmbH, 58840 Plettenberg (DE)
(72) Erfinder: Peters, Dirk, 59909 Bestwig (DE); Schwermann, Meinhard, 58809 Neuenrade-Affeln (DE)
(74) Vertreter: Zinnecker, Armin

(56) Entgegenhaltungen:
- EP-A- 1 004 465
- WO-A1-02/074608
- DE-A1- 19 605 450
- DE-A1- 19 756 459
- JP-A- 2001 246 995
- US-A- 3 829 149
- US-A- 4 978 562

## Beschreibung

Die Erfindung betrifft einen Seitenaufprallträger für ein Kraftfahrzeug. Der Seitenaufprallträger umfaßt ein Trägerteil, das ein geschlossenes Profil aufweist.

Derartige Seitenaufprallträger sind bereits bekannt. Sie werden bei Seitentüren von Kraftfahrzeugen verwendet. Allerdings können sie auch bei anderen Bauteilen eines Kraftfahrzeugs Verwendung finden, insbesondere bei Karosseriebauteilen oder Klappen, insbesondere Heckklappen, von Kraftfahrzeugen. Das Trägerteil ist vorzugsweise aus Metall, insbesondere aus Stahl. Es weist ein Hohlprofil auf. Das Profil kann auch annähernd geschlossen sein. Aus Festigkeitsgründen ist allerdings in den meisten Fällen ein vollständig geschlossenes Profil vorteilhaft oder erforderlich.

Die EP 1 004 465 A2 offenbart einen dort als Rammschutzträger bezeichneten Seitenaufprallträger mit einem Trägerteil, das ein geschlossenes Hohlprofil aufweist. Das Profil umfaßt einen Druckgurt und einen Zuggurt, die durch seitliche Stege mit konkaver Form miteinander verbunden sind. Der Zuggurt ist breiter ausgebildet als der Druckgurt. Der Druckgurt besitzt eine konkave Form. Bei einem Aufprall werden Druckkräfte auf den Druckgurt ausgeübt. Mit zunehmender Verformung unter der Einwirkung dieser Druckkräfte vergrößert sich die Wölbung im Druckgurt, und die seitlichen Stege wölben sich zunehmend einwärts. Sie nehmen schließlich eine zusammengefaltete ziehharmonikaförmige Form an.

Aus der DE 197 56 459 A1 ist ein ähnlicher Aufprallträger für eine Kraftfahrzeugtür bekannt, bei dem das geschlossene Kastenprofil mit einem verdichtbaren Füllmaterial ausgefüllt sein kann, beispielsweise mit PU-Schaum, der im Normalzustand das Kastenprofil nicht vollständig füllt. Durch einen derartigen Kunststoffschaum kann allerdings die Festigkeit des Seitenaufprallträgers nicht oder nur geringfügig gesteigert werden. Darüber hinaus ist das Einbringen von Kunststoff-Schäumen mit erheblichen Prozeßkosten verbunden.

Ein Seitenaufprallträger für ein Kraftfahrzeug nach dem Oberbegriff des Anspruchs 1 ist aus der DE 196 05 450 A1 bekannt.

Die US 3 829 149 A offenbart einen Seitenaufprallträger für ein Kraftfahrzeug mit einem Trägerteil, das ein geschlossenes Profil aufweist, wobei in dem Trägerteil ein Einlegeteil vorgesehen ist, das sich über den gesamten Bereich des Trägerteils erstreckt.

Aus der US 4 978 562 A ist ein Seitenaufprallträger für ein Kraftfahrzeug bekannt, der ein Einlegeteil aufweist, daß sich über den gesamten Bereich des Trägerteils erstreckt.

Die JP 2001 246995 A offenbart ein energieabsorbierendes Bauteil, das aus einem hohlen Teil aus einer Aluminiumlegierung und einem hochfesten elastischen Teil aus einem Schaumstoff besteht.

Aus der WO 02/074608 A1 ist eine Vorrichtung zur Verstärkung einer Karosseriesäule eines Fahrzeugs bekannt, die ein Einlegeteil aufweist, das sich über den gesamten Bereich der Karosseriesäule erstreckt und das einen variablen Querschnitt aufweist.

Aufgabe der Erfindung ist es, einen verbesserten Seitenaufprallträger der eingangs angegebenen Art vorzuschlagen.

Erfindungsgemäß wird diese Aufgabe durch die kennzeichnenden Merkmale des Anspruchs 1 gelöst. In dem Trägerteil ist ein Einlegeteil vorgesehen. Hierdurch kann eine erhebliche Steigerung der Festigkeit des Seitenaufprallträgers erreicht werden. Vorzugsweise hat das Einlegeteil eine niedrigere Festigkeit als das Trägerteil. Das Einlegeteil kann in das Trägerteil eingelegt werden. Es kann allerdings auch anderweitig in das Trägerteil eingebracht werden. Dabei kann zunächst das Trägerteil hergestellt und anschließend das Einlegeteil eingelegt oder anderweitig eingebracht werden. Es ist allerdings auch möglich, Trägerteil und Einlegeteil gleichzeitig herzustellen.

Das Einlegeteil erstreckt sich über einen Teilbereich des Trägerteils, der in der Mitte des Trägerteils liegt.

Das Trägerteil ist aus Stahl hergestellt, wobei der Stahl eine Zugfestigkeit von mindestens 800 N/mm² aufweist. In bestimmten Anwendungsfällen kann es vorteilhaft sein, wenn der Stahl eine höhere Zugfestigkeit aufweist, insbesondere eine Zugfestigkeit von mindestens 1000 N/mm².

Die Erfindung ist dadurch gekennzeichnet, daß das Trägerteil durch Rollprofilieren hergestellt ist oder dadurch, daß das Trägerteil durch Laserschweißen hergestellt ist.

Vorteilhafte Weiterbildungen der Erfindung sind in den Unteransprüchen beschrieben.

Eine vorteilhafte Weiterbildung ist dadurch gekennzeichnet, daß das Einlegeteil mit dem Trägerteil nicht schubfest verbunden ist. Die Verbindung ist vorzugsweise derart, daß bei einer Biegebelastung des Seitenaufprallträgers eine Relativbewegung zwischen dem Trägerteil und dem Einlegeteil möglich ist.

Das Einlegeteil kann in seiner Position zum Trägerteil gesichert sein. Insbesondere kann das Einlegeteil mit dem Trägerteil verklebt sein. Dabei kann die Sicherung bzw. Verklebung derart ausgestaltet sein, daß eine Relativbewegung zwischen Einlegeteil und Trägerteil bei einer Biegebelastung des Seitenaufprallträgers möglich ist.

Das Einlegeteil kann das Profil des Trägerteils vollständig ausfüllen. Es kann allerdings auch vorteilhaft sein, wenn das Einlegeteil das Profil des Trägerteils teilweise ausfüllt.

Vorzugsweise ist das Einlegeteil aus Kunststoff. Besonders geeignet ist PA (Polyamid). Es können allerdings auch andere Kunststoffe verwendet werden, beispielsweise PET.

Eine weitere vorteilhafte Weiterbildung ist dadurch gekennzeichnet, daß das Einlegeteil aus nicht verstärktem Kunststoff ist. Insbesondere handelt es sich bei dem nicht verstärkten Kunststoff um einen Kunststoff, der keinen Glasfaseranteil und/oder keinen Anteil aus Kunststoffschaum aufweist.

Vorteilhaft ist es, wenn das Einlegeteil temperaturbeständig ist. Das Einlegeteil ist vorzugsweise aus einem temperaturbeständigen Kunststoff hergestellt.

Erfindungsgemäß weist das Trägerteil und/oder das Einlegeteil einen konstanten Querschnitt auf. Wenn der Querschnitt über die Länge des Trägerteils bzw. des Einlegeteils konstant ist, können sich Vorteile, insbesondere Vereinfachungen, bei der Herstellung ergeben.

Ausführungsbeispiele der Erfindung werden nachstehend anhand der beigefügten Zeichnung im einzelnen erläutert. In der Zeichnung zeigt
- Fig. 1: eine Rohbautür eines Kraftfahrzeugs in einer Seitenansicht von innen,
- Fig. 2: einen Seitenaufprallträger in einer perspektivischen Ansicht,
- Fig. 3: eine vergrößerte Teilansicht des Seitenaufprallträgers gemäß Fig. 2,
- Fig. 4: den Seitenaufprallträger in einer vergrößerten perspektivischen Ansicht,
- Fig. 5: das Profil des Seitenaufprallträgers und
- Fig. 6: einen abgewandelten Seitenaufprallträger in einer Profilansicht.

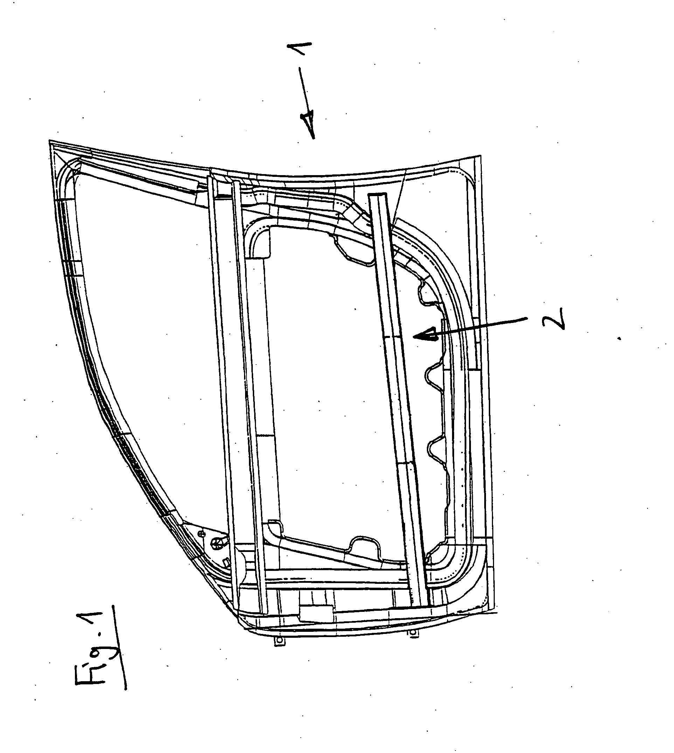

Die in Fig. 1 gezeigte Kraftfahrzeug-Rohbautür umfaßt einen Türkasten 1, in dem ein Seitenaufprallträger 2 vorgesehen ist, der im wesentlichen in FahrzeugLängsrichtung verläuft. Der Seitenaufprallträger 2 ist im unteren Bereich des Türkastens 1 vorgesehen. Er verläuft von vorne nach hinten leicht ansteigend.

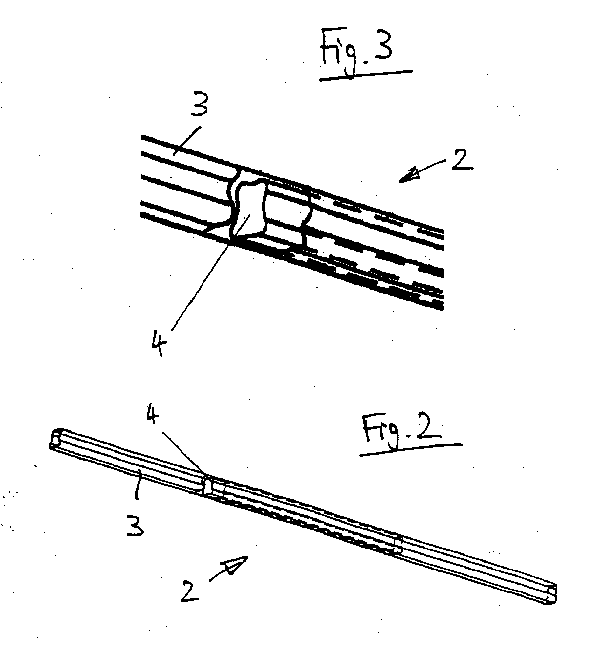

Wie aus Fig. 2 bis 5 ersichtlich, umfaßt der Seitenaufprallträger 2 ein Trägerteil 3, das ein geschlossenes Profil aufweist, und ein Einlegeteil 4, das in dem Trägerteil 3 vorgesehen ist. Das Trägerteil 3 ist aus Stahl hergestellt. Sein Profil entspricht im wesentlichen demjenigen nach der EP 1 004 465 A2. Es besteht aus einem Druckgurt 6, der über seitliche Bogenstücke mit seitlichen Stegen 7, 8 verbunden ist, die durch weitere Bogenstücke in den Zuggurt 5 übergehen. Der Druckgurt 6 ist eben ausgestaltet. Der Zuggurt 5 hat eine konkave, nach innen gekrümmte Form. Die seitlichen Stege 7, 8 sind ebenfalls konkav nach innen gekrümmt.

Das Einlegeteil 4 ist aus Kunststoff hergestellt. Es erstreckt sich über einen Teilbereich des Trägerteils 3, nämlich beidseits der Mitte dieses Trägerteils 3. Die Länge des Einlegeteils 4 beträgt etwa ein Viertel bis ein Drittel der Länge des Trägerteils 3.

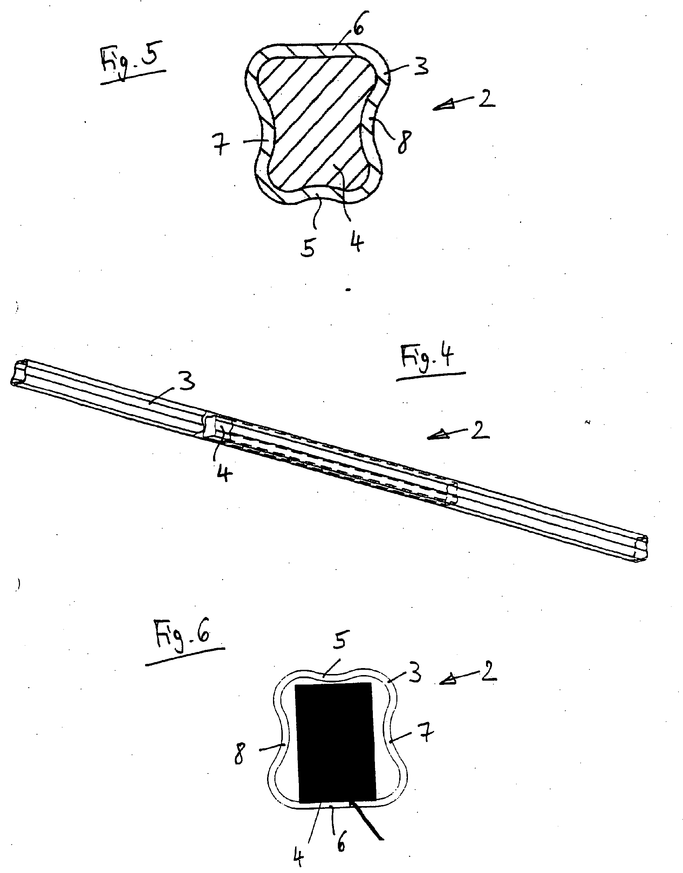

Ferner füllt das Einlegeteil 4 das Profil des Trägerteils 3 vollständig aus, wie insbesondere aus Fig. 5 ersichtlich.

Bei der in Fig. 6 gezeigten, abgewandelten Ausführungsform wird das Profil des Trägerteils 3 von dem Einlegeteil 4 nur teilweise ausgefüllt. Das Profil des Trägerteils 3 entspricht im wesentlichen demjenigen der ersten Ausführungsform nach Fig. 2 bis 5. Das Einlegeteil 3 weist einen rechteckigen Querschnitt auf. Es ist an einer Schmalseite mit der Innenseite des Druckgurtes 6 des Profils des Trägerteils 3 verbunden, nämlich verklebt. Die gegenüberliegende Schmalseite des Einlegeteils 3 weist einen geringfügigen Abstand zum Zuggurt 5 des Profils des Trägerteils 3 auf. Die seitlichen Stege 7, 8 des Profils des Trägerteils 3, die nach innen konkav gekrümmt sind, sind von den Längsseiten des Einlegeteils 4 beabstandet.

Durch die Erfindung wird ein verbesserter Seitenaufprallträger für Kraftfahrzeuge geschaffen. Das Einlegeteil kann auch als Inlay bzw. Kunststoff-Inlay bezeichnet werden. Die Länge des Einlegeteils kann im Verhältnis zum Trägerteil je nach spezifischer Lastenheftanforderung festgelegt werden. Das Einlegeteil wird vorzugsweise im mittleren Bereich des Seitenaufprallträgers positioniert. Es kann dort mit oder ohne Schubverbund zum Trägerteil befestigt werden. Je nach Auslegungswunsch für die Lastanforderung kann dabei die spezielle Materialart bzw. Kunststoffart sowie die spezielle Inlay-Geometrie derart gewählt werden, daß die spezifische Lastanforderung, insbesondere das Kraft-Weg-Verhalten im Crash-Fall, das Gesamtgewicht und/oder die Temperaturbeständigkeit, erfüllt wird.

Als Kunststoffmaterial für das Einlegeteil ist PA (Polyamid) besonders geeignet, da es besondere Anforderungen hinsichtlich Zugfestigkeit und Temperaturbeständigkeit erfüllt. Grundsätzlich können allerdings auch andere Kunststoffe verwendet werden. Aus Testmessungen ergibt sich, daß nicht-verstärktes PA und PET gute Ergebnisse liefern.

Durch das Einbringen des Einlegeteils in das ursprünglich leere Profil, beispielsweise aus hochfestem Stahl wie z.B. Docol DP 1200, wird verhindert, daß es bei bestimmten Crash-Anforderungen, die insbesondere an die US-Norm FMVSS 214 angelehnt sind, zu frühzeitigen Bauteilinstabilitäten (Knicken) und damit zu Bauteilversagen in Form von Rißbildung und darauf folgendem Bruch des Profils bzw. Stahlprofils kommt. Dieses ungünstige Verhalten tritt ohne Einlegeteil insbesondere bei dünnwandigen hochfesten Stählen auf und ist für diese aufgrund ihrer relativ geringen Bruchfestigkeit im Vergleich zu mittelfesten bzw. weichen Stählen geradezu charakteristisch. Andererseits bietet hochfester Stahl mit Zugfestigkeiten ≥ 1000 MPa im Vergleich zu weniger hochfesten Stählen den großen Vorteil eines anfänglich sehr hoch verlaufenden Kraftniveaus und damit einer hohen anfänglichen Energieabsorption im Falle eines Seitenaufpralls nach FMVSS 214 (quasistatische Biegung durch einen zylinderförmigen Stempel mit Durchmesser 300 oder 305 mm gemäß Lastenheftanforderung vieler OEMs). Dieses wird durch hochfeste Stähle schon bei geringen Blechstärken gewährleistet und bietet daher große Vorteile hinsichtlich der Gewichts- und Kostenoptimierung.

Wenn anstelle eines Einlegeteils das Bauteilversagen durch eine Erhöhung der Stahlblechdicke zu erreichen versucht würde, würde dies die genannten Gewichts-und Kostenvorteile zunichte machen, soweit es überhaupt möglich wäre, da die gegenwärtig verfügbare Blechstärke der hochfesten Stähle auf Dicken um 2 mm beschränkt ist. Durch die Erfindung kann erreicht werden, daß die großen Vorteile der hochfesten Stähle geringer Blechstärke nicht durch den Nachteil des frühzeitigen Materialversagens bei geringen Verformungswegen eingebüßt werden.

Die Erfindung ist für Seitenaufprallträger und andere Strukturteile mit überwiegender Biegebeanspruchung geeignet. Als Material für das Trägerteil werden vorzugsweise hochfeste Stähle mit einer minimalen Zugfestigkeit von 800 N/mm² verwendet. In bestimmten Fällen ist es vorteilhaft, hochfeste Stähle mit einer höheren minimalen Zugfestigkeit zu verwenden, insbesondere mit einer minimalen Zugfestigkeit von 1000 N/mm². Das Trägerteil kann rollprofiliert oder geschweißt, inbesondere lasergeschweißt, sein. Ferner kann es vorteilhaft sein, wenn der hochfeste Stahl eine Blechstärke von höchstens 2 mm aufweist. Insbesondere können hochfeste Stähle mit einer Blechstärke von 1 mm bis 2 mm verwendet werden.

## Patentansprüche

1. Seitenaufprallträger für ein Kraftfahrzeug mit einem Trägerteil (3) aus Metall, das ein geschlossenes Profil aufweist und in dem ein Einlegeteil (4) vorgesehen ist,
wobei sich das Einlegeteil (4) über einen Teilbereich des Trägerteils (3) erstreckt, der in der Mitte des Trägerteils (3) liegt, wobei das Trägerteil (3) und/oder das Einlegeteil (4) einen Konstanten Querschnitt aufweisen,
**dadurch gekennzeichnet dass**
das Trägerteil (3) aus einem Stahl mit einer Zugfestigkeit von mindestens 800 N/mm² ist,
und dass das Trägerteil (3) durch Rollprofilieren oder durch Laserschweißen hergestellt ist .

2. Seitenaufprallträger nach Anspruch 1, **dadurch gekennzeichnet, daß** das Einlegeteil (4) mit dem Trägerteil (3) nicht schubfest verbunden ist.

3. Seitenaufprallträger nach Anspruch 1 oder 2, **dadurch gekennzeichnet, daß** das Einlegeteil (4) in seiner Position zum Trägerteil (3) gesichert ist.

4. Seitenaufprallträger nach einem der vorhergehenden Ansprüche, **dadurch gekennzeichnet, daß** das Einlegeteil (4) das Profil des Trägerteils (3) vollständig oder teilweise ausfüllt.

5. Seitenaufprallträger nach einem der vorhergehenden Ansprüche, **dadurch gekennzeichnet, daß** das Einlegeteil (4) aus Kunststoff, insbesondere PA ist.

6. Seitenaufprallträger nach einem der vorhergehenden Ansprüche, **dadurch gekennzeichnet, daß** das Einlegeteil (4) aus nicht verstärktem Kunststoff ist.

7. Seitenaufprallträger nach einem der vorhergehenden Ansprüche, **dadurch gekennzeichnet, daß** das Einlegeteil (4) temperaturbeständig ist.

## Claims

1. Side impact beam for a motor vehicle having a metal beam part (3) which comprises a closed profile and in which an insert part (4) is provided, wherein the insert part (4) extends over a portion of the beam part (3) which is situated in the centre of the beam part (3), and wherein the beam part (3) and/or the insert part (4) have a constant cross section, **characterized in that** the beam part (3) is made of a steel having a tensile strength of at least 800 N/mm², and **in that** the beam part (3) is produced by roll profiling or by laser welding.

2. Side impact beam according to Claim 1, **characterized in that** the insert part (4) is not connected to the beam part (3) in a shear-resistant manner.

3. Side impact beam according to Claim 1 or 2, **characterized in that** the insert part (4) is secured in its position relative to the beam part (3).

4. Side impact beam according to one of the preceding claims, **characterized in that** the insert part (4) completely or partially fills the profile of the beam part (3).

5. Side impact beam according to one of the preceding claims, **characterized in that** the insert part (4) is made of plastic, in particular PA.

6. Side impact beam according to one of the preceding claims, **characterized in that** the insert part (4) is made of non-reinforced plastic.

7. Side impact beam according to one of the preceding claims, **characterized in that** the insert part (4) is temperature-resistant.

## Revendications

1. Renfort contre des chocs latéraux pour un véhicule automobile avec une partie de support (3) en métal, qui présente un profilé fermé et dans laquelle une pièce d'insertion (4) est prévue, où la pièce d'insertion (4) s'étend sur une zone partielle de la partie de support 3), qui se situe au milieu de la partie de support (3), où la partie de support (3) et/ou la pièce d'insertion (4) présentent une section transversale constante, **caractérisé en ce que** la partie de support (3) est réalisée en un acier avec une résistance à la traction d'au moins 800 N/mm2, et **en ce que** la partie de support (3) est réalisée par profilage à roulage ou par soudage à laser.

2. Renfort contre des chocs latéraux selon la revendication 1, **caractérisé en ce que** la pièce d'insertion (3) n'est pas reliée d'une manière résistant à la poussée à la partie de support (3).

3. Renfort contre des chocs latéraux selon la revendication 1 ou 2, **caractérisé en ce que** la pièce d'insertion (4) est assurée dans sa position relativement à la partie de support (3).

4. Renfort contre des chocs latéraux selon l'une des revendications précédentes, **caractérisé en ce que** la pièce d'insertion (4) remplit le profilé de la partie de support (3) complètement ou partiellement.

5. Renfort contre des chocs latéraux selon l'une des revendications précédentes, **caractérisé en ce que** la pièce d'insertion (4) est en matériau synthétique, en particulier en PA.

6. Renfort contre des chocs latéraux selon l'une des revendications précédentes, **caractérisé en ce que** la pièce d'insertion (4) est en matériau synthétique non renforcé.

7. Renfort contre des chocs latéraux selon l'une des revendications précédentes, **caractérisé en ce que** la pièce d'insertion (4) a une résistance aux températures.
